# EUROPEAN PATENT APPLICATION

(11) **EP 0 672 885 A2**
(43) Date of publication of application: **20.09.1995**
(21) Application number: 95850059.7
(22) Date of filing: 16.03.1995
(51) Int. Cl.: G01B 5/004

(54) **A coordinate measuring machine**

(30) Priority: 18.03.1994 SE 9400908
(71) Applicant: C.E. JOHANSSON AB, S-631 81 Eskilstuna (SE)
(72) Inventor: Amman, Henrik, S-633 46 Eskilstuna (SE); Petterson, Bo, S-644 36 Torshälla (SE); Wiklund, Rudolf, S-183 30 Täby (SE)
(74) Representative: Örtenblad, Bertil Tore

(57) **Abstract**

A coordinate measuring machine which operates in accordance with a cylindrical coordinate system which includes a linear Z-axis, a linear r-axis which extends perpendicular to the Z-axis, and a rotational angle Φ around the Z-axis. According to the invention the coordinate measuring machine includes a first stationary part (1), a foot, which supports the movable machine parts, a second part (2) which has the form of a column projecting from the foot (1) and which includes means which are rotatable around the Z-axis relative to the stationary part and to a selected rotational angle Φ. The machine also includes a third part (3) in the form of a first arm which extends perpendicular to the Z-axis and carries a measuring probe (5), either directly or indirectly, wherein the arm (3) coacts with means for moving the probe in the direction of the r-axis. The machine includes a further part (4) which can be moved in the direction of the Z-axis for moving said probe (5) in the direction of said Z-axis and the probe includes a measuring arm (6) whose tip carries a measuring ball (7) or like device, wherein the measuring arm is attached to the machine so that the probe will be moved when one of the second (2), the third (3) or the further part (4) is rotated or moved axially and wherein the measuring arm (6) of the probe (5) is mounted for rotation about an axis parallel with the Z-axis.

## Description

The present invention relates to a portable coordinate measuring machine.

Coordinate measuring machines are normally comprised of a three-dimensional cartesian coordinate system. With the aid of a system of three slides which are connected in series for movement in the X, Y and Z directions, it is possible to position a measuring probe at any desired point within a parallelepipedic measuring area. Measuring scales are positioned in the aforesaid directions, so that the positions of respective slides can be read-off and therewith enable the position of the probe to be determined accurately at each position in said area.

Such coordinate measuring machines are used for stationary applications, in which the coordinate axis system is fixedly mounted on a stand or frame which includes a measuring table on which an object to be measured is placed for measuring purposes. Thus, when measuring an object it is necessary to take the object from a machine in which the object is worked for instance, and place the object on the measuring table and then replace the object in the machine tool when measuring of the object is complete. This is a time-consuming task, and it is possible for errors to occur when the object is to be repositioned accurately on the machine tool. In many instances, it is desirable to avoid handling the object in the aforesaid manner, for several different reasons.

One drawback with permanently fixed, or stationary, coordinate measuring machines is that the object to be measured must always be transported to the machine. In some instances, only a limited part of the object shall be measured, although it is nevertheless necessary to transport the whole object, which may weigh tens of tons, to and from the coordinate measuring machine. In other instances, it is impossible to move the object, or the object is too large to be accommodated in the coordinate measuring machine.

There is thus a great need for portable coordinate measuring machines.

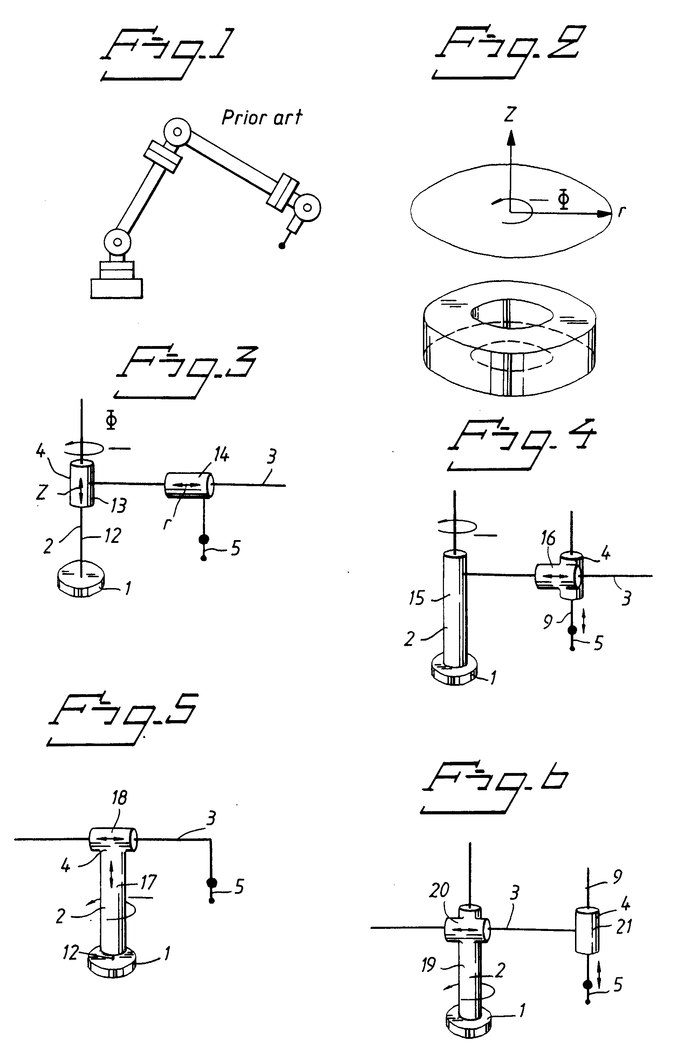

A known portable coordinate measuring machine is illustrated schematically in Figure 1. In the case of this known machine, six rotational joints with incorporated angle sensors are required to provide the accessibility required by the measuring tip of the probe. One drawback with a machine of this construction is that it is difficult to obtain a sufficiently high degree of accuracy with respect to the angle sensors, which are also liable to produce additive errors. Distinct from a machine which operates in accordance with a cartesian coordinate system, in which the three mutually perpendicular directions are dependent solely on a respective measuring device and the measuring errors of this device, a measurement value obtained with the portable machine illustrated in Figure 1 is composed of an X-component, a Y-component and a Z-component for each rotational joint. The final measuring result is obtained with the aid of an algorithm which contains the angular values of all six rotational joints. A linear calibration with the aid of a laser interferometer in accordance with known technology carried out on machines having a cartesian coordinate system would be very complicated when put into effect, since it is not possible to check each coordinate axis individually in this case. A linear calibration, in which angular corrections of six axles shall be calculated simultaneously, tends to become extremely complicated mathematically. Because of this, the precision of such a portable machine is, in practice, limited to one or a few tenths of a millimeter. This prevents the machine from being used instead of a permanently fixed coordinate measuring machine, in which the precision achieved is in the order of micrometers.

Another machine is known from French Patent Specification No. FR 2,604,779. The machine includes a slide which is movable along a horizontal axle. The slide has rotatably mounted thereon a measuring arm which extends perpendicularly to the axle. The measuring arm can rotate around the axle and is also able to moved axially therealong. In addition to occupying a large part of the table surface on which the machine is placed, which may be a table belonging to a machine tool, the use of this type of machine is also greatly limited because its construction does not enable objects of all shapes to be measured. For instance, it is not possible to measure holes and other shapes on that side of the object which lies distal from the measuring machine at the same time and in the same machine set-up as when measuring on that side of the object which is proximal to the machine. Furthermore, it is only possible to measure holes which are generally perpendicular to the horizontal axis of the machine. Holes that are drilled, or bored, at other angles cannot be measured.

There is thus a great need for a portable measuring machine whose precision corresponds to the precision of a permanently fixed coordinate measuring machine, and which is capable of measuring the whole of an object in one and the same machine set-up.

The present invention provides a machine which satisfies these needs.

Thus, the present invention relates to a coordinate measuring machine which operates in accordance with a cylindrical coordinate system having a linear Z-axis, a linear r-axis which extends perpendicular to the Z-axis, and a rotational angle Φ around the Z-axis, and is characterized in that the machine includes a first stationary part, a foot, which carries the movable parts of the machine and from which there extends a second part which includes means that are rotatable around the Z-axis in relation to the stationary part and to a desired rotational angle Φ; and in that a third part in the form of a first arm that extends perpendicularly to the Z-axis carries a measuring probe, either directly or indirectly, said arm coacting with means for moving the probe in the direction of the r-axis; and in that there is included a further part which can be moved in the direction of the Z-axis so as to move said probe in the direction of said Z-axis; and in that the probe includes a measuring arm which carries at its tip a measuring ball or like device and which is mounted in the machine so that the probe will be moved when either one of the second, the third or the further part is rotated or moved linearly; and in that the measuring arm probe attachment is rotatable about an axis parallel with the Z-axis.

The invention will now be described in more detail with reference to exemplifying embodiments thereof and also with reference to the accompanying drawings, in which
- Figure 1 illustrates a known portable measuring machine;
- Figure 2 illustrates the measuring area of an inventive coordinate measuring machine;
- Figures 3-6 illustrate different embodiments in which the invention is applied;
- Figure 7 illustrates one arrangent according to the invention;
- Figure 8 is a more detailed view of part of the Figure 7 arrangement;
- Figure 9 is a side projection of the arrangement shown in Figure 7;
- Figure 10 is a sectional view taken on the line I-I in Figure 7;
- Figures 11-13 show a number of variants for counterbalancing an inventive coordinate measuring machine;
- Figure 14 illustrates a preferred embodiment for counterbalancing a first arm;
- Figure 15 illustrates part of the Figure 14 embodiment;
- Figure 16 illustrates the measuring of an object;
- Figures 17-21 illustrate different arrangement of measuring probes in an inventive coordinate measuring machine;
- Figure 22 illustrates measuring of an object where the probe is rotatable in a horizontal plane;
- Figure 23 illustrates an example of a motorized coordinate measuring machine according to the invention;
- Figure 24 illustrates the application of an inverted operational mode in which the machines hangs above the object to be measured;
- Figure 25 illustrates a further embodiment in which a measuring probe is mounted directly in the end of the first arm;
- Figure 26 illustrates in principle a preferred embodiment;
- Figure 27 illustrates the embodiment of Figure 26 more clearly;
- Figure 28 is a sectional view taken on the line I-I in Figure 27;
- Figure 29 is a more detailed view of the machine shown in Figure 27;
- Figure 30 is a sectional view of the machine shown in Figure 29, taken at right angles to the plane of the paper in Figure 29; and
- Figure 31 shows the machine of Figure 30 from above.

The object of the present invention is to provide a portable measuring apparatus which does not have the accuracy limitations described above with regard to rotary joint systems, and while avoiding the large volume and weight that is required for a machine which operates in accordance with the cartesian coordinate system. Because the inventive machine utilizes the known cylindrical coordinate system but with a vertical rotational axis, there is avoided the space and weight requirement of a purely cartesian system. By using three separate dimensional properties, namely the rotational angle Φ, the radius **r** and the axial displacement Z, it is possible to measure each of these properties and to calibrate separately in accordance with known calibration principles, for instance in accordance with Swedish Patent Specification Nos. 441 037 and 461 548. This enables the same level of precision as that achieved with fixed machines to be also achieved with a portable machine of the present kind, i.e. an accuracy in the order of some micrometers. Because the rotational axis is vertical, an inventive measuring machine will take up only a very small surface area when set-up.

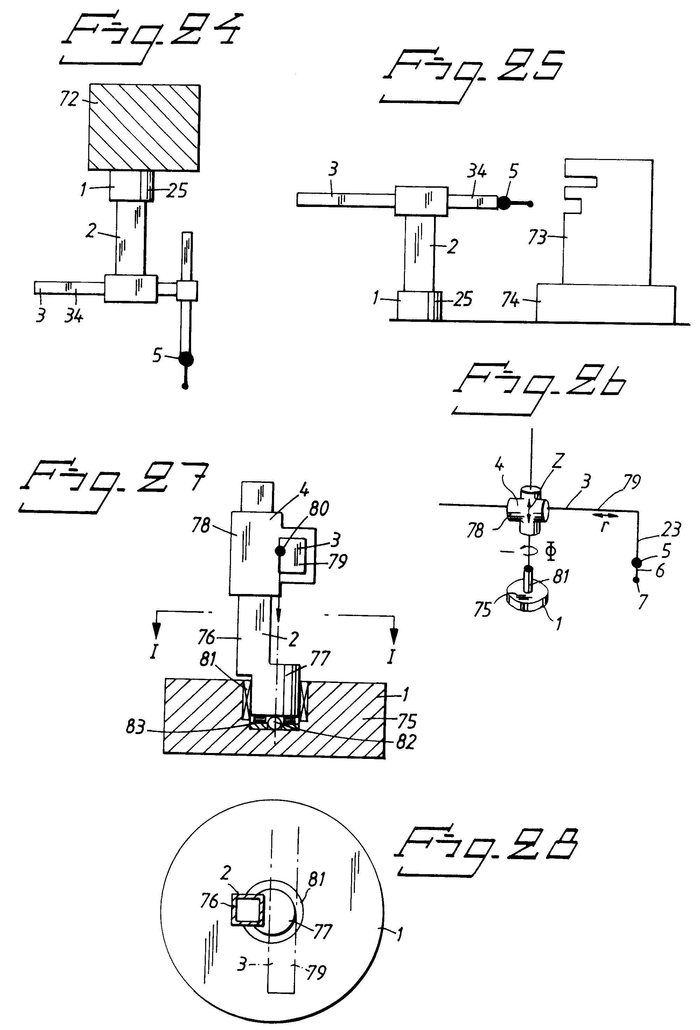

By using a suitable, known measuring probe which includes a vertical measuring tip and four measuring tips which are placed in a known probe holder at a mutual angular pitch of 90°, the machine can be used to measure shapes on both that side of the object that lies proximal to the machine and that side of the object which is distal from the machine in one and the same machine set-up in relation to the object, by placing the probe, for instance, in a vertically and downwardly directed projection on the horizontally movable arm, see Figure 26.

Figures 26-28 illustrate a preferred embodiment of a coordinate measuring machine which works in accordance with a cylindrical coordinate system having a linear Z-axis, an r-axis which extends linearly at right angles to the Z-axis, and a rotational angle Φ around the Z-axis. In all Figures, the coordinate system is the system shown in Figure 2, in which the Z-axis extends vertically in the Figures, as illustrated in Figure 27.

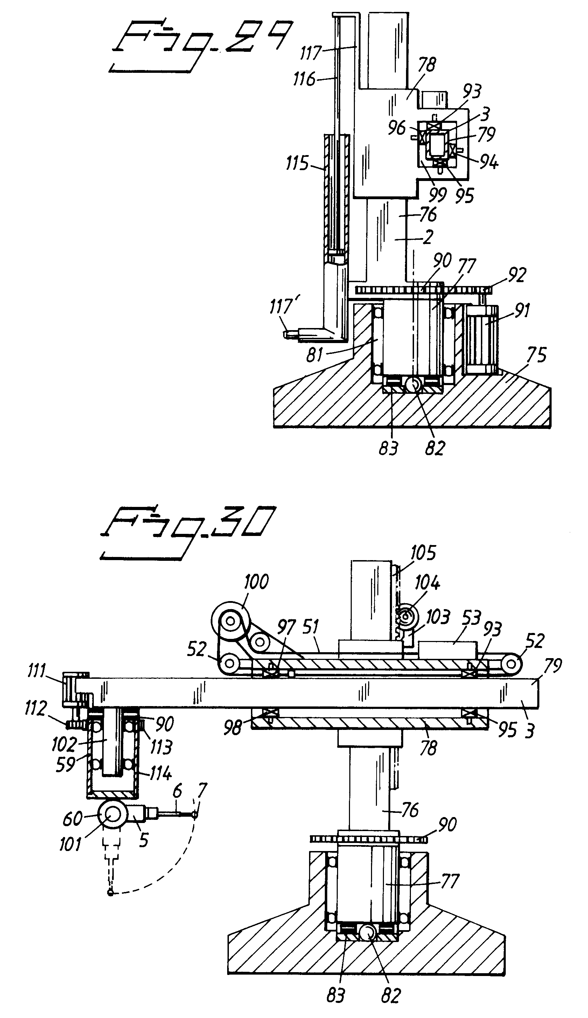

The coordinate measuring machine includes a first stationary part 1, a foot on which the machine is intended to rest. Extending from the foot is a second part 2 which includes means that are rotatable around the Z-axis in relation to the stationary part. In the case of the embodiment shown in Figure 27, the second part has the form of a vertical column 2. The column 2 is rotatable in relation to the stationary part 1 about the Z-axis to a desired rotational angle Φ. This rotary movement of the column relative to the foot is limited, however, to about one revolution. A third part three in the form of a first arm extends at right angles to the Z-axis and carries a suitable known measuring probe, either directly or indirectly. The arm coacts with means for moving the probe in the direction of the r-axis. In the case of the embodiment shown in Figure 27, the arm is displaceable in its longitudinal direction along the r-axis. This arm is shown in broken lines in Figure 28. The machine also includes a further part 4 which is displaceable in the direction of the Z-axis for moving the probe in the direction of said Z-axis. In the case of the first embodiment illustrated in Figure 26, this further part 4 has the form of a slide 78 which moves along the column in a vertical direction. As before mentioned, the machine also includes a probe 5, see Figure 26, which includes a measuring arm 6 provided with a measuring ball 7 or the like at its tip. The probe 5 is mounted in the machine such that the probe will be moved when one of the second 2, the third 3 or the further part 4 is rotated or displaced. The attachment of the measuring arm 6 of the probe on the arm 3 is pivotal about an axis that extends parallel to the Z-axis.

In the embodiment shown in Figure 26, the slide 4 is thus attached to the column 2 and can be moved therealong, i.e. in the direction of the Z-axis. Furthermore, the first arm 3 is carried by the slide 4 and can be displaced relative thereto, i.e. along the r-axis. The probe 5 is carried by the first arm 3 at one end thereof.

In the case of a second embodiment illustrated in Figures 6 and 7, the slide which forms the further part 4 of the first embodiment is replaced by a second arm 9 which is carried by and extends perpendicularly to said first arm 3 and can be moved in its longitudinal direction relative to the first arm 3 in the direction of the Z-axis. In this case, the first arm 3 moves in a slide 10; 20 carried by the column 2. The probe 5 is carried by the second arm 9 at one end thereof.

Both of these embodiments enable the probe to be moved within a cylindrical volume defined by the length of working stroke of the machine in the directions of the Z-axis and the r-axis.

The column 2 is journalled in the foot 1 in the case of both embodiments.

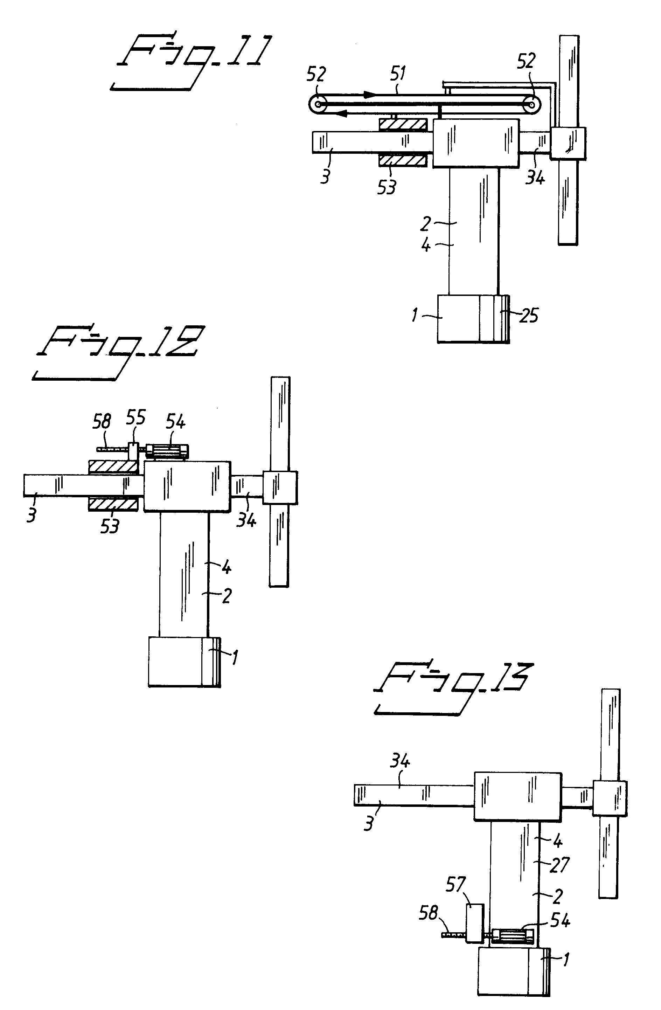

According to another preferred embodiment, see Figure 19, the attachment 59 of the measuring arm 6 of the probe 5 is mounted for rotation about an axis which extends perpendicularly to the aforesaid rotational axis, i.e. the Z-axis. This embodiment enables the use of a probe having only one measuring tip while nevertheless enabling all hollows, holes and shapes on the object to be measured.

An inventive coordinate measuring machine thus operates within a cylindrical volume in which the coordinates of a measuring point are determined by the coordinate system illustrated in Figure 2. Figures 3 to 6 illustrate different methods of achieving the various movements. Figure 3 illustrates a system which includes an axle 12 forming the Z-axis and firmly mounted in a foot 1. In this embodiment, the means which rotates around the Z-axis is comprised of a slide 13, said slide also being displaceable along the axle 12. The arm 3 is fixedly mounted in the slide 13 and carries a second slide 14 which can be moved along the arm 3 in the direction of the r-axis. The probe is mounted on the second slide 14.

Figure 4 illustrates an alternative embodiment in which the part that projects out from the foot 1 is comprised of a column 15 which can be rotated about the Z-axis but which is not slidable along said Z-axis. The arm 3 carries a slide 16 which can be moved along the arm. Similar to what is shown in Figure 7, this sleeve carries a second arm 9 which, in turn, carries the probe.

Figure 5 illustrates another alternative embodiment in which a slide 17 is mounted on an axle 12 for movement in the direction of the Z-axis and for rotation about the axle 12. The slide 17 includes a bearing 18 which supports the arm 3 for movement of the arm in the direction of the r-axis. The probe is attached directly to the arm 2. As will be seen from Figure 5, the outer part of the arm is angled downwards, so as to include a vertical part which extends parallel with the Z-axis.

Figure 6 illustrates a further alternative embodiment in which a column 19 can be rotated relative to the foot 1, this column including a journal bearing 20 corresponding to the journal bearing 18 of the Figure 5 embodiment. This bearing supports the arm 2, which is displaceable in the direction of the r-axis. Provided on the outer end of the arm is a further journal bearing 21 which carries a second arm 9, this second arm being movable, or displaceable, in the direction of the Z-axis and carrying a probe 5.

According to one preferred embodiment of the invention, the column has a four-sided outer cross-sectional shape. The aforesaid further part has a four-sided cross-sectional shape and is journalled to the outer surface of the column by means of an air bearing. Furthermore, the first arm has an outer four-sided cross-sectional shape and is non-rotatably journalled in a four-sided hole in the aforesaid further part by means of air bearings which act on the outer surface of the first arm.

Figures 7, 8, 9 and 10 illustrate a first embodiment of one such arrangement in more detail, which corresponds essentially to the principle illustrated in Figure 5, in which the slide 17 is rotatable and also movable along the axle 12.

In the case of the embodiment illustrated in said Figures, both the rotational movement about the Z-axis and the axial movement along said Z-axis is effected with the aid of a column 2 which is journalled for rotation relative to an upstanding axle 24 fixedly mounted in the foot 25. This is achieved by journalling an inner square tube 26 to the axle 24 for rotation relative to said axle. The square tube is journalled to the axle 24 by means of two ball bearings, or some other suitable bearings, such as air bearings, where one ball bearing is placed at the lower end of the axle and the other is placed at its upper end. A further square tube 27 is journalled outside the inner tube 26 and can be moved along the inner tube, i.e. along the Z-axis, see Figure 10.

In the embodiment illustrated in Figure 10, the axial movement and the rotational movement have each been divided into an individual bearing pack. The inner square tube 26 can be rotated around the pillar 24 through the medium of a ball bearing 85. The outer square tube 27 can be displaced axially along the inner tube 26 through the medium of an air bearing.

The tubular pillar 24 is fixedly mounted to the foot 1. The outer tube 27 carries a cross-slide bearing housing 28 at its upper part.

The outer tube 27 is journalled to the inner tube by means of a number of air bearings 29-33, see Figure 10. Such bearing set-ups are located in mutually spaced relationship along the length of the tube, wherein in Figure 7 one bearing set-up is located on a lower level and is referenced 31b and 30b, while a bearing set-up located on a higher level is referenced 31a and 30a. The air bearings are of a suitable known kind. The first arm 34 has a square cross-section and is displaceable in the direction of its long axis in relation to the slide 10. The slide 10 has the form of a bearing housing 28 which is provided with air bearings 35-38, see Figure 9. Such bearing set-ups are found at two locations along the length of the bearing housing, namely at 35a, 38a and 35b, 38b respectively, see Figure 7. The air bearings act on the outer surfaces of the arm 34.

A second arm 39 is attached to one end of the arm 34 by means of a clamping device 40, 41. A probe 5 is mounted on the lower part of the second arm 39. The clamping device 40, 41 enables the second arm 39 to be manually adjusted so as to adapt the machine to the object to be measured.

Instead of a clamping device, there can be used a slide in which the second arm 9 is displaceably mounted.

The extent to which the outer tube 27 is moved axially in relation to the inner tube 26, and also the extent to which the first arm 34 is moved relative to the slide 28, is determined by known linear measuring scales, for instance scales constructed in accordance with Swedish Patent Specification No. 411 392, or with the aid of a conventional incremental type scale. The angle through which the inner tube 26 is rotated in relation to the column 24, i.e. the rotational angle Φ, is determined by an angle sensor 44, 45, see Figure 8, for instance of the absolute measuring type described in Swedish Patent Specification No. 411 392.

Despite the fact that the axially movable part can be made from a lightweight material, its weight is so great that it cannot be permitted as a vertical force in the system. Manual use of the coordinate measuring machine is also made extremely difficult, or rendered impossible, when it is necessary to overcome the weight of the axially movable machine parts when moving the probe vertically. Consequently, the coordinate measuring machine includes a counterbalance means for counterbalancing the axially acting mass of the machine, this counterbalancing effect enabling the vertically movable part of the machine to be made virtually weightless. A conceivable embodiment in this regard is illustrated in Figure 7. The tubular column 24 has mounted therein a piston 46 which is so well fitted in the column as to seal against the inner surface of said column in the absence of any appreciable friction. Air compressed to an appropriate pressure is delivered through an inlet 47 in the foot, such as to exert an upwardly directed force on the piston 46. This force is transmitted to the underside 50 of the slide 28, see Figure 8, through the medium of a piston rod 48 and a rotational journal bearing, preferably in the form of a ball 49. This type of balancing facility can be included in all embodiments, to facilitate manual adjustment of the machine.

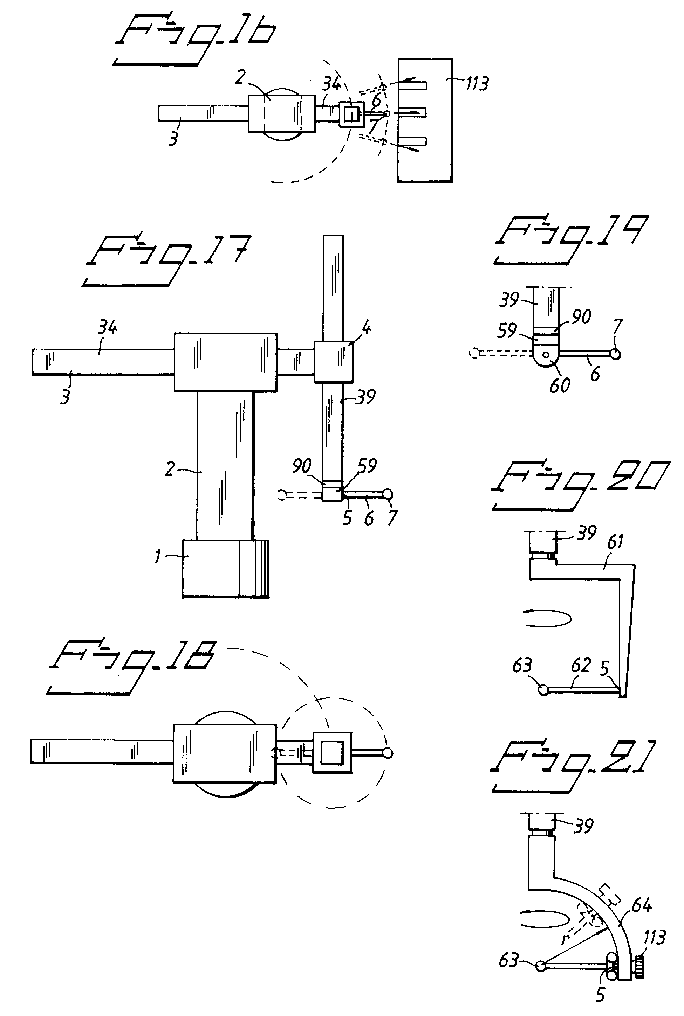

Figure 23 illustrates a motor-driven variant of a measuring machine according to Figure 7. In this case, the outer tube 27 is driven vertically, the direction of the Z-axis, and the arm 34 is driven in the direction of its longitudinal axis, the r-direction. This enables the use of motors or linear drive elements of an electromechanical or a pneumatic or hydraulic type. The movements may be controlled numerically and also controlled to perform a measuring program automatically. The movements can be transmitted to the driven measuring machine elements in many different ways, for instance through the medium of ropes, straps, ball screws, etc.

In the embodiment illustrated in Figure 23, rotation through the angle Φ is effected with the aid of a gear ring 66 mounted on the inner tube 26. Fixedly mounted on the foot 25 is a motor 65 which has a pinion wheel 67 which engages the gear ring 66. The aforesaid axial movement is effected with the aid of a gear rack 69 which extends axially and which is fixedly mounted on the outside of the inner tube 26. A motor 68 is fixedly mounted on the inside of the outer tube 27 and a pinion wheel on the motor shaft engages with the gear rack 69. Correspondingly, radial movement of the arm 34 is effected with the aid of a motor 70 mounted in the slide and a gear rack 71 fixedly mounted on the arm 34.

A second preferred embodiment of the inventive machine is shown in Figures 26-28, this embodiment already having been outlined above.

A particularly preferred embodiment of the invention will be described with reference to this arrangement. In the case of this preferred embodiment, the upper part of the column on which the first arm is rotationally rigid is displaced laterally in relation to the rotational centre of the machine in the foot through a distance such that the three-point vector of the machine will coincide with the rotational axis of the column in said foot when seen in a plane at right angles to the direction of movement of the first arm.

According to this arrangement, there is mounted on the foot 75 a rotatable, or twistable, column 76, 77 whose lower part 77 is cylindrical in shape and whose upper part 76 is positioned excentrically in relation to the centre line of the lower cylindrical part. The upper part 76 has a square or rectangular cross-section, whereby a rotationally-rigid bearing in the Z-direction is created for the slide 78, which is movable along the aforesaid upper part 76 of the column. The slide 78 also includes a journal bearing for the first arm 3, 79. In this regard, the slide is constructed in the same manner as the slide 28 of the Figure 7 embodiment.

The eccentrical displacement of the arm 79 relative to the centre line, or the rotational axis of the column, is so balanced that the centre of gravity 80 of the movable parts of the machine in the projection shown in Figure 27 will coincide with said rotational axis. This means that the column journal bearing in the foot will be free from bending or flexural stresses.

The column is journalled in a rotational journal bearing 81 which is mounted in the foot 75 and which is preferably comprised of a known air bearing. That part of the machine which is supported by the foot rests on a thrust bearing, preferably in the form of a ball 82, so as to take-up the vertically acting forces.

The rotational angle Φ of the machine is measured with the aid of an angle sensor 83 of the aforesaid kind mounted beneath the lower part 77. Known electronic measuring scales are also provided for measuring movement of the slide 78 in relation to the column 76 and for measuring movement of the arm 79 in relation to the slide 78.

It will be understood that the machine illustrated in Figure 27 can be included in a motor-driven arrangement of the kind described with reference to Figure 23. One such arrangement is described below.

One feature of the inventive machine is that it lacks a measuring table traditional to coordinate measuring machines, but is instead mounted directly on the working table of a machine tool, for instance, so that the workpiece can be checked in the tool without needing to remove the workpiece therefrom. This means that the operator will not have complete control of the properties of the setting-up table. There is therefore a risk that the variation in torque in the contact between the foot of the coordinate measuring machine and the table of the machine tool that occurs when the centre of gravity of the machine is shifted radially as a result of the radial arm being moved between its end limit positions can result in not unnegligible deformation in the table, causing wrong measurement values to be obtained. There is also a danger that the intrinsic structure of the machine will be deformed when the centre of gravity is shifted.

Accordingly, in the case of one highly preferred embodiment of the invention the machine is balanced radially in response to movements of the first arm in the r-direction. This embodiment includes a balancing device in the form of a movable weight which rests on the slide in which the first arm moves which is, alternatively, carried by the first arm. The weight is intended to be moved in the r-direction by drive means when the first arm is moved in the r-direction and is therewith moved in the opposite direction relative to the first arm which carries the probe, so that the three-point vector of the movable system of the machine will coincide with the rotational axis of the column.

Arrangements according to this embodiment are illustrated in Figures 11, 12, 14 and 15.

Figure 11 illustrates a simple principle solution. When the axle 34 moves radially outwards, a wire 51 pulls out a counterweight 53 in the opposite direction, via a guide wheel 52. The counterweight is carried by the arm 34 and is placed on the opposite side of said column in relation to the probe-carrying end of the first arm. When the arm is moved in the other direction, the counterweight is also moved in the opposite direction. An exact counterbalancing effect can be obtained by suitable dimensioning of the weight and the transmission of the described weight-pulling system.

Figure 12 illustrates an alternative embodiment. In this case, the counterweight 53 is moved by means of a motor 54 whose shaft is connected to a screw-threaded screw 58 and which extends in a threaded sleeve 55 fitted to the counter-weight. The extent to which the counterweight is moved is determined by the extent to which the shaft 34 is moved radially. The extent to which the arm is moved radially is given by the regular measuring system of the machine.

Figure 14 illustrates a preferred embodiment in which the counterweight is manoeuvered by means of a wire 51 and a guide wheel 52, and in which the wire is attached to the arm 34 at a point 56 for axial movement of the arm 34. In this embodiment, the counterweight rests on the slide 28 in which the arm 34 moves.

In the case of this embodiment, it is also preferred that the counterweight is supported by an air bearing 86 on said first arm, along which the weight is intended to move. The air bearing 86 is an integral part of the weight 53, and air is delivered through a conduit 87 and passed, via a chamber 88 in the weight, to the undersurface of the weight, where two bearing surfaces are provided, see Figure 15.

The aforedescribed embodiments balance-out the whole of the movable part of the machine.

In the case of a further embodiment illustrated in Figure 13, the machine is only counterbalanced with regard to radial shifts in the centre of gravity relative to the machine foot 2. In this case, the counterweight is located in the proximity of the rotatable tube 27 and may have the form of the illustrated counterweight 57 which is non-rotatably mounted on a screw 58 driven by a motor 54. The counterweight 57 can thus be moved linearly along the screw 58. This linear movement is calculated on the basis of linear movement of the arm 34, in the same way as with the embodiment shown in Figure 12.

Figure 16 illustrates a general problem that occurs when using a cylindrical, or polar, coordinate system for measuring an object 113. Different rotational angles in the machine are illustrated in broken lines. Since the arm 34 can only be displaced radially outwards from the rotational axis of the column 2, it is not possible to measure radial holes and surfaces of the object in the plane shown in Figure 16. Essentially, only the surface that faces towards the machine in Figure 16 can be measured, and only the centermost holes. Other holes and side surfaces are inaccessible.

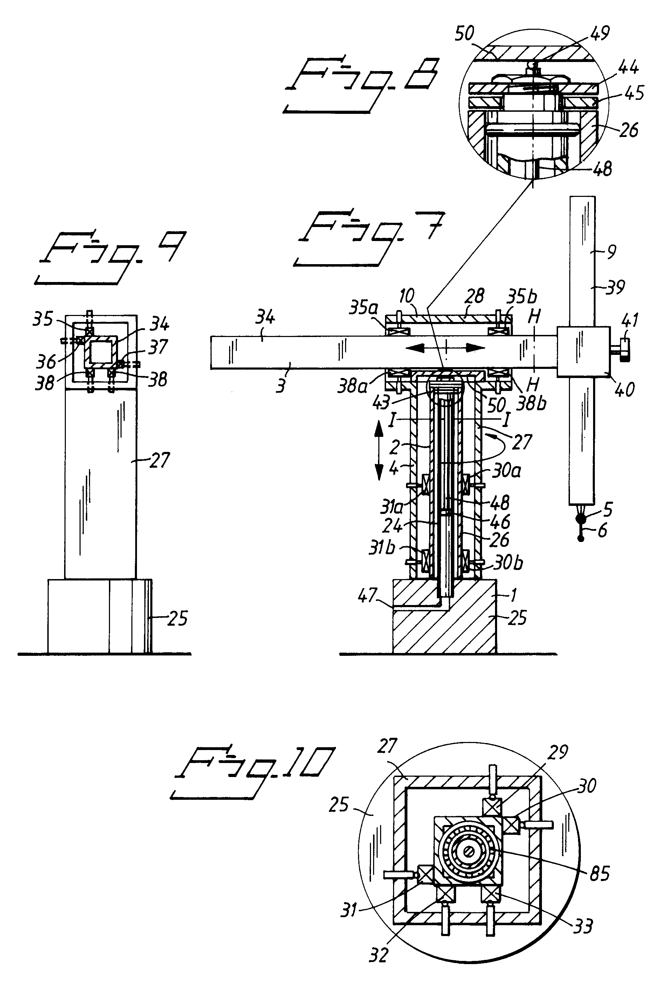

This problem is eliminated in accordance with the invention by applying one of the embodiments illustrated in Figures 17 and 20, in which, as before mentioned, the attachment of the measuring arm on the probe can be rotated about an axis that extends parallel with the Z-axis. Figure 18 is a view from above of the measuring area covered by the machine shown in Figure 17.

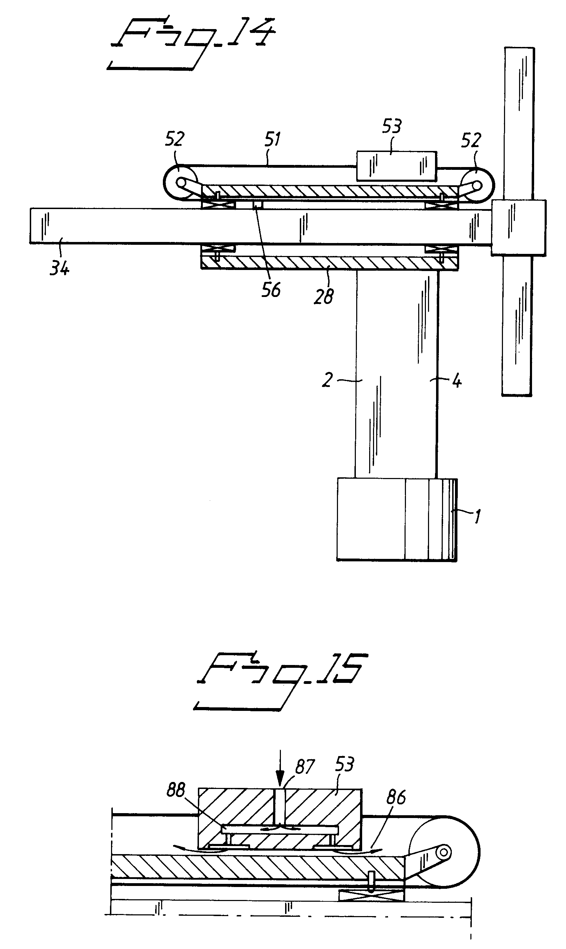

According to one highly preferred embodiment, the measuring arm attachment can also be rotated about an axis which extends perpendicular to the rotational axis. This is illustrated in Figures 19 and 21.

In Figures 17, 19, 20 and 21, the attachment 59, 60, 61 and 64 respectively of the measuring arm that carries the probe can be rotated in relation to the arm 39 around an axis which extends parallel to the rotational axis of the column 2, i.e. about the Z-axis. Suitable known angle sensors 90 are provided at respective rotational joints.

As earlier mentioned, when using a cylindrical coordinate system, one fundamental problem is found in providing general access to five sides of an object which in principle is parallelepipedic, and to be able to measure holes, hollows and shapes on all sides of the object. The earlier known machine according to French Patent Specification 2,604,779 can only be used, for instance, to measure a limited surface area of an object, and is only able to measure holes that are parallel with the direction in which the radially displaceable arm is moved. Consequently, a measuring machine that is constructed in accordance with this known principle is not general in the same way as measuring machines that operate with cartesian coordinate axles. These machines are therefore greatly limited with regard to use and can only be used for special applications, such as for measuring the shape of bulging details, such as car rooves, for instance, and have therefore a limited commercial value.

As a result of the recently mentioned feature of the invention, namely that the attachment of the measuring arm of the probe is also able to rotate about an axis which is perpendicular to the aforesaid rotational axis, the machine is able to work in accordance with a cylindrical coordinate system with the same generality in use as machines which work in accordance with conventional cartesian based systems.

Figure 17 illustrates an embodiment in which the arm 39 is provided with a rotatable attachment 59 for the probe arm 6. The object of this embodiment is to be able to adjust the probe to a selected angle in the horizontal plane, therewith enabling each hole or other shape to be measured irrespective of its direction in relation to the primary cylindrical coordinate system, as illustrated in Figure 22. This probe may have the form of a fixed adjustable probe, where adjustments are made manually, whereafter the probe is conveniently locked in its adjusted position, with the aid of a lock screw, for instance. After having adjusted the position of the probe, a calibrating measuring process can be carried out against a reference surface or a spherical reference body mounted on the object to be measured or on the machine table. Alternatively, as before mentioned, there may be provided at the rotary joint an angle sensor which produces a signal corresponding to the rotational position of the probe arm.

Figure 19 illustrates an embodiment in which the probe holder is provided with a further degree of freedom, namely is able to rotate about an axis which extends perpendicular to the rotational axis of the column 2. This provides further possibilities of measuring surfaces and holes that are angled to the horizontal plane.

According to another preferred embodiment, the probe is mounted for rotation about an axis which extends parallel with said rotational axis, wherein the probe is carried so that the centre position of the measuring ball will remain unchanged as the probe rotates.

This embodiment is exemplified in Figures 20 and 21. The embodiment enables the alignment of the probe to be angled without providing angle sensors in the rotational joints, while retaining knowledge of the position of the probe tip in relation to the coordinate system without subsequent calibration.

The arrangement shown in Figure 20 includes a U-shaped member 61 which is journalled accurately on the lower end of the vertical arm 39 in a manner to enable the U-shaped member to swing. The measuring tip 63 of the probe is adjusted through the medium of the probe arm 62 so that the centre of the tip will be located in line with the centre line of rotation of the U-shaped member.

Figure 21 illustrates an alternative embodiment. A curved bracket means 64 is attached to the lower end of the vertical arm 39. The bracket means 64 has the same purpose as the U-shaped member 61 in Figure 20, but is provided with a radius **r** whose centre lies on the centre rotational line of the bracket means. The arrangement includes a slide 113 which can be moved along the bracket means 64, as illustrated in broken lines. This enables the probe arm to be adjusted to different angles at the same time as the arm is able to rotate about said centre axis while maintaining the position of the probe tip in relation to the coordinate system, without subsequent calibration.

Figure 24 illustrates an embodiment in which the invention is applied with an inverted operational mode, in which the machine hangs from an object 72 so as to be suspended above the object to be measured.

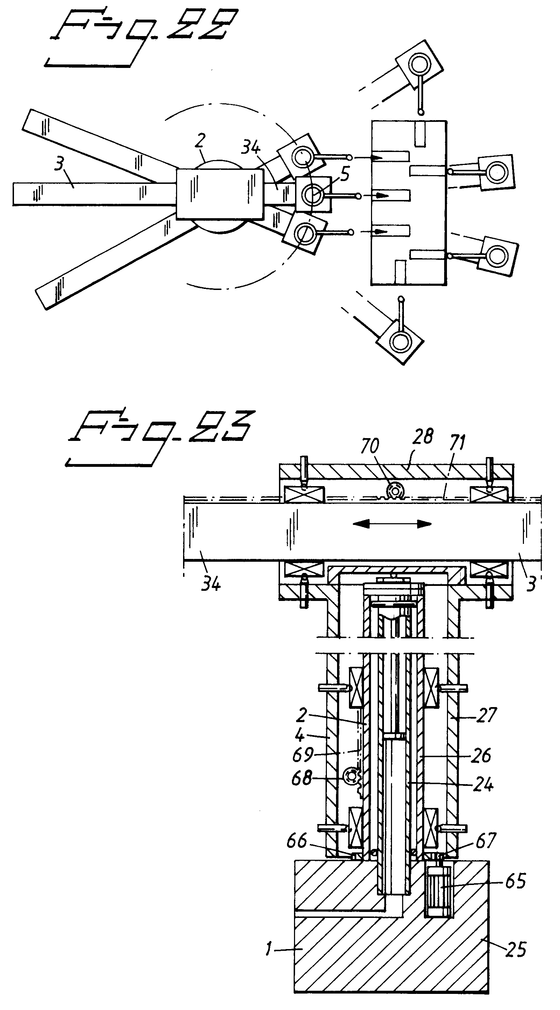

Figure 25 illustrates a further embodiment in which a measuring probe 5 is mounted directly onto one end of the first arm 34. The probe need not be rotatable about an axis when an object 73, 74 having the configuration shown in Figure 25 is to be measured with respect to the surface facing towards the machine. However, the probe will preferably be constructed for rotation about two mutually perpendicular axes, as illustrated in Figure 19.

Figures 29, 30 and 31 illustrate a machine according to Figure 27 which have a more detailed motor drive. The same reference signs are used as those used in Figure 27, and also the same reference signs as those used in Figure 14 with regard to the arrangement of a counterweight 53.

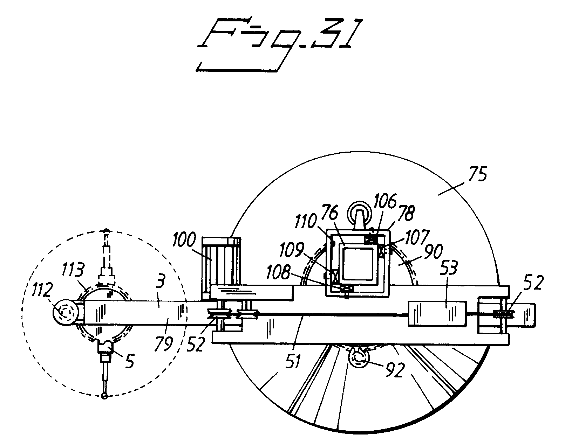

The Figure 29 embodiment includes a gear ring 90 which is driven by a motor 91 whose shaft carries a pinion wheel 92 which engages the gear ring. The gear ring rotates the lower part 27 of the column 2 around the Z-axis, i.e. the part 77 of the column 2 journalled in the foot 75. It will also be seen from Figures 29 and 30 that the first arm 3 is mounted on air bearings 93-96 which act on its outer surface. The air bearings 93-98 are mounted on the inner surface of a square-section neck 99 on the slide 78.

Figure 30 shows a motor 100 which functions to drive the first arm 3 in the r-direction, i.e. in its longitudinal direction relative to the slide 78. Similar to the manner aforedescribed with reference to Figure 14, a counterweight 53 is moved in an opposite direction to the direction in which the first arm moves. The arrangement also includes a motor 103 which has mounted on its shaft a pinion wheel 104 which engages with a gear rack 105 mounted on the upper part 76 of the column. The motor is mounted on the slide 78 and is used to drive the slide 78 along the column 76 in the Z-direction.

Figure 31 also shows the slide 78 air-journalled on the column 76, where air bearings 106-109 act on the outer surface of the column. The air bearings are mounted on the inside of the square-section neck 110 of the slide.

Figure 30 illustrates a probe suspended in the way illustrated schematically in Figure 19. The probe 5 is rotatable about an axle 101 which extends perpendicular to the Z-axis, and also about an axle 102 which extends parallel with the Z-axis. The probe is rotated about the axle 102 by means of a motor 111 whose shaft carries a pinion wheel 112 which engages with a gear ring 113. The motor 111 is mounted in the second arm 3. The gear ring is mounted in the housing 114 of the probe attachment 59. The probe may also be rotated about the axle 101 by means of a motor. An angle sensor 83, 90 is provided at each rotary joint, as described above. In this regard, an angle sensor may also be provided in the rotary joint formed by the axle 101.

Figure 29 also shows a cylinder 115 which acts between the slide 78 and the foot 75. The upper part of the piston rod 116 of the cylinder is attached in a projection 117 from the slide 78. Pressure medium, such as compressed air, can be delivered to the cylinder 115 through an inlet 117, so as therewith to counterbalance the weight of the movable machine parts.

Although the invention has been described above with reference to different embodiments thereof, it will be obvious that these embodiments can be modified in many ways without departing from the basic concept of being able to measure all sides of an object in a cylindrical coordinate system with the exception of that side on which the object rests. For instance, all embodiments can be achieved in a motor-driven alternative, or in a manual alternative in which the machine is manoeuvered manually.

The dimensions of the machine can vary within wide limits.

One of a large number of conceivable sizes is an embodiment in which the machine has a height of roughly 50-100 centimeters and where the first arm has a length of about 50-100 centimeters.

The present invention shall not therefore be considered restricted to the aforedescribed and illustrated embodiments thereof, since variations and modifications can be made within the scope of the following Claims.

## Claims

1. A coordinate measuring machine which operates in accordance with a cylindrical coordinate system which includes a linear Z-axis, a linear r-axis which extends perpendicular to the Z-axis, and a rotational angle Φ around the Z-axis, **characterized** in that the coordinate measuring machine includes a first stationary part (1), a foot, which supports the movable machine parts, a second part (2) which has the form of a column projecting from the foot (1) and which includes means which are rotatable around the Z-axis relative to the stationary part and to a selected rotational angle Φ; in that a third part (3) in the form of a first arm extends perpendicular to the Z-axis and carries a measuring probe (5), either directly or indirectly, wherein the arm (3) coacts with means for moving the probe in the direction of the r-axis; in that the machine includes a further part (4) which can be moved in the direction of the Z-axis for moving said probe (5) in the direction of said Z-axis; in that the probe includes a measuring arm (6) whose tip carries a measuring ball (7) or like device, wherein the measuring arm is attached to the machine so that the probe will be moved when one of the second (2), the third (3) or the further part (4) is rotated or moved axially; and in that the measuring arm (6) of the probe (5) is mounted for rotation about an axis parallel with the Z-axis.

2. A machine according to Claim 1, **characterized** in that the means for moving the probe (5) in the direction of the r-axis includes a slide which is arranged (18, 20, 28, 78) stationarily in relation to the column and which carries the first arm (3).

3. A machine according to Claim 1, **characterized** in that the means for moving the probe (5) in the direction of the r-axis includes a slide (14, 16) which is carried by and displaceable along the first arm (3).

4. A machine according to Claim 2 or 3, **characterized** in that said further part is comprised of a second arm (9) which is carried by and extends perpendicularly to said first arm (3) and which is mounted for movement in its longitudinal direction relative to the first arm (3) along the Z-axis; and in that the probe (5) is carried by the second arm (9) at one end thereof.

5. A machine according to Claim 1 or 2, **characterized** in that said further part (27) and said means (26), which is rotatable about the Z-axis relative to the stationary part (1) through a selected rotational angle Φ, are comprised of a first slide (17; 26-27) ? which is mounted adjacent to and displaceably along a column (12, 24) which is upstanding from the foot (1, 25), i.e. along the Z-axis, and which slide (17, 26) is rotatable relative to the column; and in that said first arm (3, 34) is carried by a second slide (18, 28) which is supported by the first slide (17; 26-27) wherein the first arm (3, 34) is movably arranged relative to the second slide (18, 28), i.e. along the r-axis; and in that the probe (5) is carried by the first arm (3, 34) at one end thereof (Figs. 5 and 7).

6. A machine according to Claim 1, 2 or 4, **characterized** in that said means mounted for rotation around the Z-axis relative to the stationary part and rotatable to a selected rotational angle Φ is comprised of a column upstanding from the foot (1); in that a slide (20) is mounted adjacent said column, said slide (20) carrying said first arm (3) which is movable in relation to the slide in the r-direction; in that a second slide (21) is fixedly mounted on one end of the first arm; in that the further part is comprised of a second arm (9) which is carried by? and is displaceable in the Z-direction relative to said second slide (21); and in that the probe (5) is carried by the second arm. (Fig. 6).

7. A machine according to Claim 1 or 3, **characterized** in that said further part and said means which is rotatable about the Z-axis in relation to the stationary part and can be rotated to a selected angle Φ is comprised of a first slide (4) which is mounted adjacent to and displaceable along a column (12) upstanding from the foot, i.e. along the Z-axis, said slide (4) being rotatable in relation to the column (12); in that the first arm (3) is fixedly mounted to the slide (4); in that a second slide (14) is carried by and displaceable along the first arm (3), i.e. along the r-axis; and in that the probe (5) is carried by the second slide (14). (Fig. 3).

8. A machine according to Claim 1, 3 or 4, **characterized** in that said means which is rotatable about the Z-axis in relation to the stationary part and can be rotated to a selected angle Φ is comprised of a column (15) upstanding from the foot (1); in that said first arm (3) is mounted adjacent the column (15); in that a second slide (16) is carried by and displaceable along the first arm (3), i.e. along the r-axis; in that said further part is comprised of a second arm (9) which is carried by and displaceable in the Z-direction relative to said second slide (16); and in that the probe (5) is carried by the second arm (3). (Fig. 4).

9. A machine according to Claim 1, 2, 4, 5 or 6, **characterized** by a counterbalancing arrangement in the form of a movable weight (53) which rests on the slide (28; 78) or alternatively is carried by the first arm (3), wherein the weight (53) can be moved by drive means (51, 52; 54) in the r-direction when said first arm (3) is moved in said r-direction, and is therewith moved in an opposite direction relative to the direction of movement of the first arm (3), such that the centre of gravity vector of the movable machine system will coincide with the rotational axis of the column (2).

10. A machine according to Claim 9, **characterized** in that the weight (53) is carried by an air bearing (86-88) on top of said slide (28; 78) or alternatively on top of said first arm (3), along which the weight is able to move.

11. A machine according to any one of Claims 1-10, **characterized** in that the column (2; 77) is journalled in said foot (1; 75).

12. A machine according to Claim 5, **characterized** in that the column (2, 26; 76) has a square outer cross-sectional shape; in that said outer part (27; 78) has a square internal cross-sectional shape; in that the further part (27; 78) is air-journalled on the outer surfaces of the column (26; 76); and in that the first arm (3, 34) has a square outer cross-sectional shape and is non-rotably journalled in a square hole in the outer part (27; 78) by means of air bearings which act on the outer surface of the first arm.

13. A machine according to Claim 12, **characterized** in that the upper part (76) of the column on which the first arm is non-rotatable journalled is displaced laterally in relation to the rotational centre of the machine in the foot (75) by an extent such that, when seen in a plane perpendicular to the displacement direction of the first arm (3), the centre of gravity vector (80) of the machine will coincide with the rotational axis of the column (77) in the foot (75).

14. A machine according to any one of Claims 1-13, **characterized** in that the attachment (60) of the measuring arm (6) carrying the probe (5) is rotatable about an axle which extends perpendicular to said rotational axis.

15. A machine according to any one of Claims 1-14, **characterized** in that angle sensors (44, 45, 90) are mounted in respective rotational joints; and in that linear measuring devices are provided for measuring linear movements of the machine.

16. A machine according to any one of Claims 1-15, **characterized** in that the probe (5) is journalled for rotation about an axis that extends parallel with said rotational axis, wherein the probe is carried (61; 64) such that the centre position of the measuring ball (63) will remain unchanged as the probe (5) rotates about said axis.
